# EUROPEAN PATENT SPECIFICATION

(11) **EP 1 460 229 B1**
(45) Date of publication and mention of the grant of the patent: **20.09.2006**
(21) Application number: 01275057.6
(22) Date of filing: 26.11.2001
(51) Int. Cl.: E05F 11/48

(54) **WINDOW-OPENING PULLEY**
RIEMENSCHEIBE FÜR EINEN FENSTERÖFFNUNGSMECHANISMUS
POULIE DE LEVE-VITRE

(43) Date of publication of application: 22.09.2004
(73) Proprietor: GRUPO ANTOLIN-INGENIERIA, S.A., 09007 Burgos (ES)
(72) Inventor: DOMINGUEZ RUBIO, Francisco, E-09007 Burgos (ES); NEBREDA DE LA IGLESIA, Félix, E-09003 Burgos (ES)
(74) Representative: Esteban Perez-Serrano, Maria Isabel
(86) International application number: PCT/ES2001/000455
(87) International publication number: WO 2003/054334

(56) References cited:
- EP-A- 0 831 247
- WO-A-98/39544
- US-A- 268 763
- US-A- 1 749 146
- PATENT ABSTRACTS OF JAPAN vol. 1995, no. 02, 31 Marzo 1995 (1995-03-31) & JP 06 320358 A (SHIROKI CORP), 22 Noviembre 1994 (1994-11-22)

## Description

The invention refers to a window-winder pulley, applicable to track type window-winders with traction cables, habitually used in automobiles. By extension, the invention can be used in any traction system based on a track with a traction cable subjected to a permanent tension stress, which is supported on at least one pulley.

Within this technique, an arrangement is already known consisting of fitting one of the pulleys located at the end of a track with a notch acting as a passage or opening made in one of the walls making up the circular channel of the pulley, in which notch is housed the cable, in order that when the pulley is rotated, the cable passes into this channel.

Due to the tension to which the cable is subjected, when it is positioned in the notch, there tends to be damage to the cable - as a result of tearing for example - which in the long term can make the cable unusable.

In addition, given the size of these pulleys (generally small) assembly problems occur because fitting is very difficult, slow and requires a great application of force by the operator, which can on occasions result in injury to the fitter.

This problem is so great that the lack of suitable supports to aid assembly makes it necessary to use special auxiliary tools.

Within these techniques, an element - US-A- 1,749,146 - is known for guiding cables, which consists of an assembly with adjacent throats acting as ramps for the cable, between which cable transfer passages are made from one throat to another, so as to allow the cable to pass gently.

This known technique may be applied by using one physical part of the assembly, which is described for inclusion in a window-winder as cable assembly pulleys.

This is precisely what is suggested by WO-A- 9839544, in which two throats are provided for one cable, separated by an transfer zone for said cable from one throat to another. One of the throats is the assembly throat and the other is the cable rolling pulley, once fitted. Both are positioned, as in US-A- 1,749,146, perpendicular to the axial axis of the pulley.

In this technique, both the assembly throat and the transfer zone force the cable into the rolling throat of the pulley, producing strains on it, since it has to overcome the natural tendency of the cable to come off and adopt a more natural position with regard to the direction of the tension to which it is subjected.

In order to begin fitting, tension is required in the cable, and this tension increases as the fitting progresses, and changes orientation as the position occupied by the ends varies, from the beginning to the end of the operation.

Throughout the entire duration of the operation, the cable is supported and rubs on the exterior wall formed by the fitting throat, which must secure and support said tension stress.

The pulley turns as the mechanism is activated, drawn by the cable itself, and a certain degree of tension is required to prevent relative slipping between the two, thus allowing the cable to move the pulley.

This additional minimum tension and the larger stresses which need to be overcome, given that the cable is forced out of its natural position, are the factors which make the fitting process difficult and costly in this technique, and can also result in damage to the window-winder assembly and injury to the operator.

The formal design of the pulley includes no projecting surface or area which could act as a support to aid the operator to apply manual effort, and thus the use of additional tools is required, both in assembly and disassembly.

The purpose of this invention is a window-winder pulley that offers gentle entrance of the cable in the assembly track.

Another purpose of the invention is a window-winder pulley that considerably reduces the stresses required in assembly.

Another purpose of the invention is a window-winder pulley which can be quickly and easily disassembled by hand.

Another purpose of the invention is a window-winder pulley which is safer and more ergonomically.

Another purpose of the invention is a window-winder pulley that reduces the risk of damage in the cable and in the pulley, during assembly and disassembly operations.

Another purpose of the invention is a window-winder pulley that makes it possible to eliminate the need for additional assembly tools.

In order to achieve these objectives, the invention claims a window-winder pulley with a single track, the rolling track, and with an opening in one of the walls of the throat; this opening is itself known in conventional techniques. In this case, however, the opening is wider and from its base and towards the exterior, there is a projection with a partial inverted truncated cone shape on the exterior surface. This truncated cone-shaped surface extends as far as the base of the rolling throat.

Said projection is raised towards the exterior of the face of the pulley on the side on which the opening is made and also projects from the circular floor of the pulley.

The projection forms a ramp, which in turn forms a surface that acts as a sliding support for the cable, in such a way that the cable at all times seeks its most natural position as the pulley turns, positioning itself progressively until it is eventually completely and definitively supported on the rolling throat of the pulley.

The fact that the cable is supported freely on a single point rather than on a rolling groove, prevents unwanted twisting and friction and therefore reduces the assembly effort.

Between this inverted truncated cone-shaped projection and the sides of the wide known opening, two passages are formed for the cable which comes from the exterior to access the rolling throat of the pulley.

The projection can be used by the operator as a point of support for applying the necessary force to turn the pulley.

The ramp that forms the projection acts in conjunction with two cylindrical projections made on the same pulley face as the aforementioned projection.

The sole function of these two cylinders is to serve as a support point and they are located on the pulley in the normal direction to its exterior plane and are symmetrically arranged in relation to the plane of symmetry of the pulley which passes through the centre of the pulley and the centre of the projection.

The function performed by the projection is carried out in conjunction with one of the two cylindrical projections, and this prevents the cable at all times from buckling to the point where it might be damaged through permanent practical deformation, bending, unravelling, breakage of threads, etc.

The sole purpose of the fact that there are two symmetrically arranged cylindrical projections is to allow there to be a single pulley reference, regardless of the turning direction, for assembling the cable on the pulley. However, at any time only one will operate, depending on the turning direction.

For all relevant purposes it is noted that - unlike the arrangements mentioned above as antecedents - in accordance with the invention, it is not necessary for the tension of the cable to reach a given initial value for said cable to move the pulley; it is sufficient simply to turn the pulley to correctly position the cable by hand.

The inverted truncated cone-shaped projection, which acts as a guideway, guarantees that at all times during the assembly operation, the cable - as a result of the effect of the tension in it - is drawn progressively and without excess stresses to its final operating position on the rolling throat, without the risk that it might come off during the operation.

At the same time, since the position of the cable is not forced and since it is allowed to find its own most natural position, the fitting efforts required are considerably reduced, making it easier to fit the cable by hand.

The reduced effort required and the fact that the support pivots, the projection and the two cylindrical flanges can be used for operating the pulley, reduces the risk of injury to the operator.

All the details of this invention are set out detail in the enclosed sheet of drawings, which shows the following:
- Figure 1 is a plan of a window-winder pulley in accordance with the invention.
- Figure 2 is the normal side view at the plane of symmetry of the pulley.
- Figure 3 is a view corresponding to Section I-I in Fig. 1.

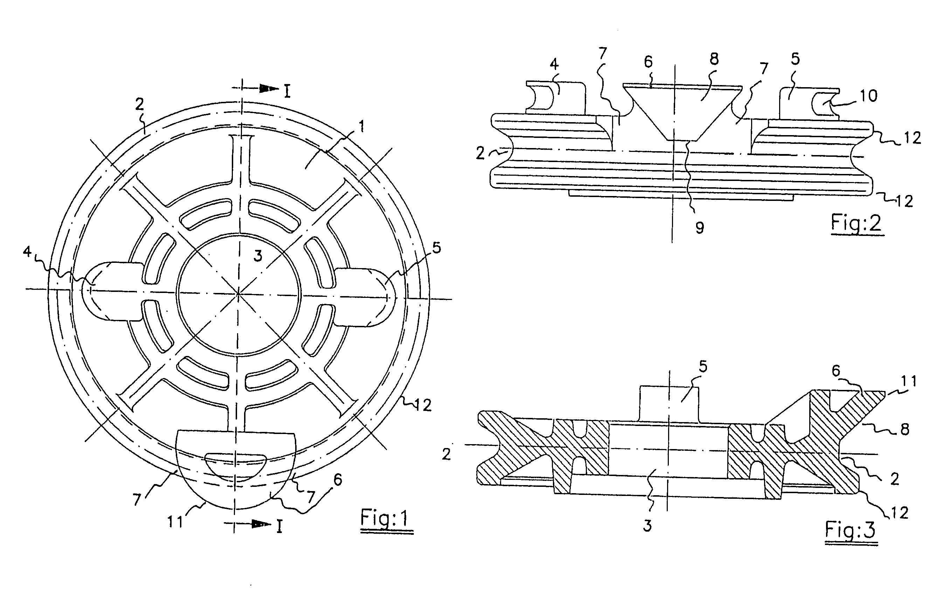

In accordance with the Fig. 1, the pulley (1) of the invention is shown with the central gap (3) for receiving its turning shaft on the traction track of the window-winder, not shown, and with its single rolling throat (2), which is logically conventional.

In the part of the known opening for the passage of the cable in the assembly (7) of the upper wall that forms the throat (2) of the pulley, the projection (6) can be seen, which has an upper exterior area (11) which projects extensively from the perimeter outline of the pulley; this projection is centred in the opening (7).

In the diameter axis of the pulley which passes through the centre of this projection (6), the two cylindrical flanges (4, 5) which are also identically separated from said axis of symmetry, project equally.

In accordance with Fig. 2, we also see the projection (6) with its inverted truncated cone-shaped front component (8) which forms a ramp which is connected at the side to the opening (7). The smaller base (9) of this ramp (8) rests in the throat, so that it is the ramp itself which leads from its upper end to the base of the rolling throat (2).

The two cylindrical flanges (4, 5) rise to approximately the same height as this projection (6), so that as shown in the drawing of these figures, they form elements which can be used by the operator to manoeuvre the pulley during assembly without requiring additional tools.

The two cylindrical flanges can be formed with recesses (10) for more controlled support of the cable. The cable is supported alternatively on one or the other of them, depending on where it enters, and is led to the projection (6). This is where the ramp (8) is situated, which by natural tendency guides the cable towards the lower end (9) inside the rolling throat, with this cable passing through the conventional opening (7) to be positioned inside this throat.

Fig. 3 shows the profile of the projection (6) and the ramp (8) it forms towards the base of the rolling throat (2), with its upper end (11) extending further out than the perimeter (12) of the pulley.

All edges of this projection (6), the opening (7), the side of the ramp. (8), etc., are suitably rounded in order to eliminate cutting edges that might damage the cable or injure the operators.

## Claims

1. - Window-winder pulley which has an annular rolling throat (2) for a cable made between two parallel walls (12), with an opening (7) in one of these walls to allow passage of said cable in order to allow its assembly in said throat, which is **characterised** as follows:
- the base of the opening (7) is fitted with a projection (6) which rises vertically towards the exterior of the wall (12) in which the aforementioned opening is made, in which this projection is in the form of an inverted truncated cone-shaped component or similar, whose smaller bottom end (9) extends towards the throat (2) and whose upper elevated end (11) is projected - also vertically - outside the perimeter of the pulley, in which the projection offers a surface (8) in the form of a ramp which opens frontally and laterally towards the opening (7).
- on either side of the axis of symmetry of the pulley and equally separated from said axis are two vertical cylindrical elevations (4, 5), made in the same face of the pulley from which the projection (6) extends.

2. - Window-winder pulley, in accordance with Claim 1, **characterised by** the fact that the two cylindrical elevations (4, 5) are fitted with recesses (10) made on their side surfaces to aid support of the cable.

3. - Window-winder pulley, in accordance with Claim 1, **characterised by** the fact that the two cylindrical elevations (4, 5) and the projection (6) rise in equal dimensions in the face of the pulley in which they are made.

## Patentansprüche

1. Rolle für Fensterheber, die über eine ringförmige Rollauskragung (2) für ein Kabel zwischen zwei parallelen Wänden (12) verfügt mit einer Öffnung (1) in einer dieser Wände, um besagtes Kabel durchzulassen, um deren Zusammenbau in besagter Auskragung zu ermöglichen, wie folgt **gekennzeichnet**:
- die Basis der Öffnung (7) ist mit einem Vorsprung (6) eingepasst, der senkrecht zur Aussenseite der Wand (12) verläuft, in der die vorgenannten Öffnung durchgeführt wurde, in der dieser Vorsprung in Form einer umgedrehten, abgeschrägten kegelförmigen Komponente oder Ähnlichem ist, deren kleineres unteres Ende (9) in Richtung der Auskragung (2) verlängert ist und deren oberes erhöhtes Ende (11) ins Äussere des Umfangs der Rolle hervorsteht ― auch senkrecht ― in der der Vorsprung eine Oberfläche (8) bietet in Form einer Rampe, die sich nach Vorne und seitlich in Richtung der Öffnung (7) öffnet.
- auf jeder Seite der Symmetrieachse der Rolle und in gleichem Abstand zu besagter Achse befinden sich zwei senkrechte zylindrische Erhöhungen (4,5), angebracht auf der gleichen Seite der Rolle, von der der Vorsprung (6) ausgeht.

2. Rolle für Fensterheber gemäss Anspruch 1, durch die Tatsache **gekennzeichnet**, dass die beiden zylindrischen Erhöhungen (4,5) mit Aussparungen (10) versehen werden, die sich auf deren seitlichen Oberflächen befinden, um zu helfen, das Kabel zu halten.

3. Rolle für Fensterheber gemäss Anspruch 1, durch die Tatsache **gekennzeichnet**, dass die beiden zylindrischen Erhöhungen (4,5) und die Vorsprünge (6) die gleichen Ausmasse auf der Seite der Rolle haben, in der sie angebracht sind.

## Revendications

1. Tambour-enrouleur pour fenêtre qui a une gorge de roulement (2) annulaire pour un câble réalisé entre deux parois parallèles (12), avec une ouverture (7) dans une des parois pour permettre le passage dudit câble afin de permettre son assemblage dans ladite gorge qui est **caractérisé en ce que** :
- la base de l'ouverture (7) est équipée d'une projection (6) qui s'élève verticalement vers l'extérieur de la paroi (12) dans laquelle est aménagée ladite ouverture, dans laquelle cette projection est sous forme d'un composant tronconique renversé ou similaire, dont l'extrémité (9) de fond inférieure s'étend vers la gorge (2) et dont l'extrémité (11) élevée supérieure est projetée -également verticalement- vers l'extérieur du périmètre du tambour, dans lequel la projection offre une surface (8) sous forme d'une rampe qui s'ouvre frontalement et latéralement vers l'ouverture (7).
- Sur un des deux côtés de l'axe de symétrie du tambour et également séparée dudit axe il y a deux élévations cylindriques verticales (4, 5), réalisées sur la même face du tambour à partir de laquelle s'étend la projection (6).

2. Tambour-enrouleur pour fenêtre, selon la revendication 1, **caractérisé en ce que** les deux élévations (4,5) cylindriques sont équipées d'évidements (10) aménagés sur leurs surfaces pour aider à supporter le câble.

3. Tambour-enrouleur pour fenêtre, selon la revendication 1, **caractérisé en ce que** les deux élévations (4,5) cylindriques et la projection (6) s'élèvent à des dimensions égales sur la face du tambour sur laquelle elles sont faites.
